# EUROPEAN PATENT APPLICATION

(11) **EP 3 628 906 A1**
(43) Date of publication of application: **01.04.2020**
(21) Application number: 19169843.0
(22) Date of filing: 17.04.2019
(51) Int. Cl.: F16L 33/00, E03C 1/02, E03C 1/04, E03C 1/06, F16L 57/06, F16L 3/00, F16L 57/00

(54) **COUPLING OF A SANITARY HOSE TO A SHOWER SUPPORT**

(30) Priority: 25.09.2018 ES 201831445 U
(71) Applicant: Caspro, S.A., 08759 Vallirana - Barcelona (ES)
(72) Inventor: TRES CASAS, Daniel, 08759 Vallirana (Barcelona) (ES)
(74) Representative: Ungria López, Javier

(57) **Abstract**

The invention relates to a coupling of a flexible sanitary hose to a shower support comprising a bushing by means of which said flexible sanitary hose is joined to a head containing a shower head, where the bushing comprises at its lower end with an annular piece of soft material, the diameter of which is greater than the diameter of the lower end of the bushing to protect said bushing when it is located in a housing of the support and simultaneously protects said housing.

## Description

### Object of the invention

The present invention relates to a coupling of a sanitary hose to a shower support which has the object of preventing the deterioration suffered by the bushing normally used to join the head of the shower to the sanitary hose when said bushing is arranged on the support of a shower. The object of the invention is also to prevent the deterioration suffered by said support when situating the head in the support.

Another object of the invention is to establish and improve the retention of the bushing in the support.

### Background of the invention

The use of showers comprising a sanitary hose, preferably a flexible one, is really known in the prior art by means of which a bushing is connected to a head containing a shower head through which the water comes out. In order for the user to be able to shower themselves while keeping their free hands, the use of a wall support is envisaged, comprising an inverted conical housing in which the hose and the head are retained by means of a bushing such that the coupling operation to the wall support means that over time the areas of the bushing and support that are in contact with one another become progressively deteriorated due to mechanical action or by the impacts produced when carrying out the mentioned anchoring. This problem becomes serious when both pieces do not fit together properly which results in significant wear of the enamel or chrome of said pieces, impairing its aesthetic.

In addition, the anchoring of the bushing in the conical housing of the support, although it is suitable for supporting the head and the hose of the shower, it does not offer optimal stability. This means that when the water is activated, abrupt movements of the head are produced, i.e. water hammers, which are really irritating for the user and which can cause the shower to come away from or fall from the interior of said support.

To solve both problems, the coupling of the invention provides a novel bushing which is fitted with a novel piece of a softer material such as for example rubber forming an impact-protection end which also optimizes the stability of the head and hose of the shower once arranged on the support.

### Description of the invention

In order to achieve the objectives and resolve the problems previously mentioned, the invention provides a novel coupling of a flexible sanitary hose to a shower support comprising a bushing by means of which said flexible sanitary hose is joined to a head containing a shower head, whose principal novelty is characterised in that the bushing comprisesat its lower end with an annular piece of soft material such that the diameter of the annular piece is greater than the diameter of the lower end of the bushing. This configuration allows the bushing to be protected when it is arranged in a housing of the support, whilst at the same time protecting the structure of said housing.

This configuration provides an impact-protection end of the bushing which also optimizes the stability of the head and hose of the shower once arranged on the support.

In the preferred embodiment of the invention, the soft material is for example rubber.

In one embodiment of the invention, in order to fix the annular piece to the lower end of the bushing, it is envisaged that the bushing is fitted with an annular channel in which a ring provided in the annular piece is retained such that said fixing is implemented.

Normally, the bushing and the housing of the shower support exhibit an inverted conical configuration, in which case the diameter of the annular piece of the bushing is greater than the smaller diameter of the bushing. This configuration facilitates the centring and shock absorption of the placement of the bushing in the housing of the support of the shower. In the preferred embodiment, this diameter is between 0.2 and 0.4 millimeters greater than the smaller diameter of the bushing.

The lower edge of the annular piece of the bushing exhibits a round configuration such that it also facilitates the centering and shock absorption of the placement of the bushing in the housing of the support of the shower.

### Description of the figures

To complete the description, and for the purpose of helping to make the characteristics of the invention more readily understandable, this description is accompanied by a set of figures constituting an integral part of the same, which by way of illustration and not limitation represents the following:

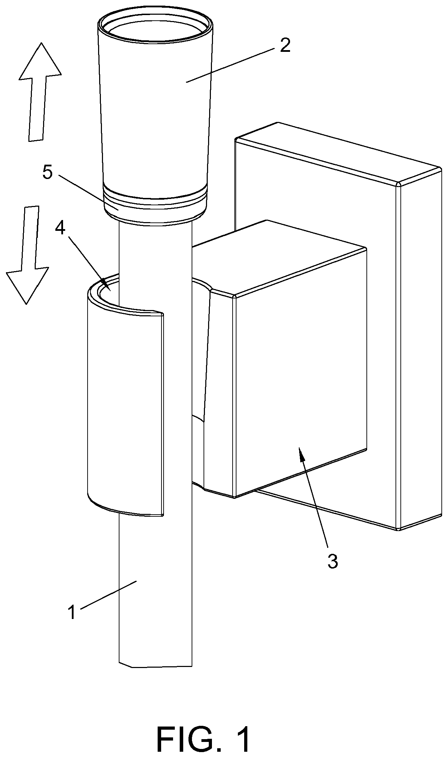

Figure 1 shows a perspective view of an exemplary embodiment of the coupling of the invention prior to being situated in the housing of the support. The head of the shower has been omitted in this figure as it is not an object of the invention and can be any of those provided in the prior art.

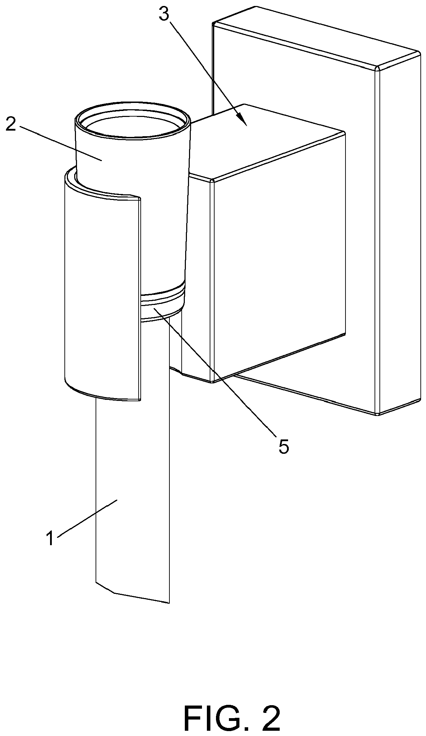

Figure 2 shows a perspective view of the example of the previous figure for the case where the coupling of the hose has been implemented in the support.

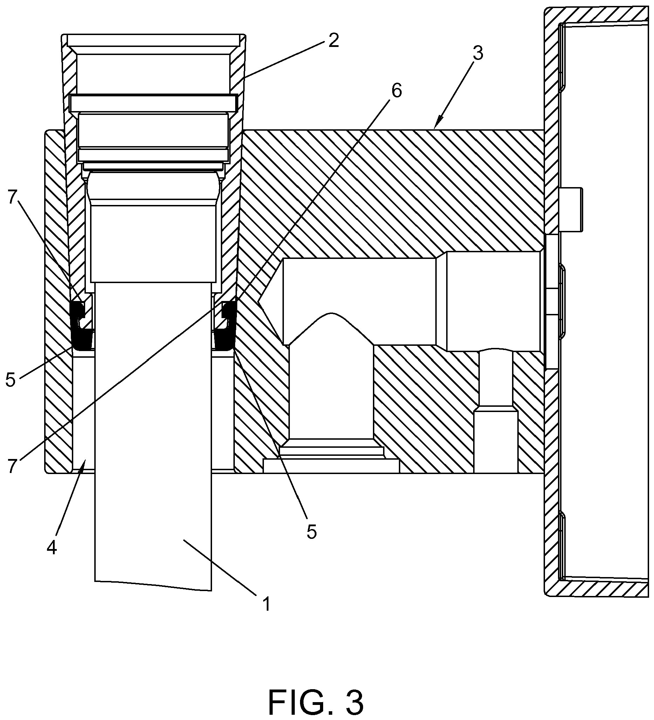

Figure 3 shows a cross sectional view of the previous figure.

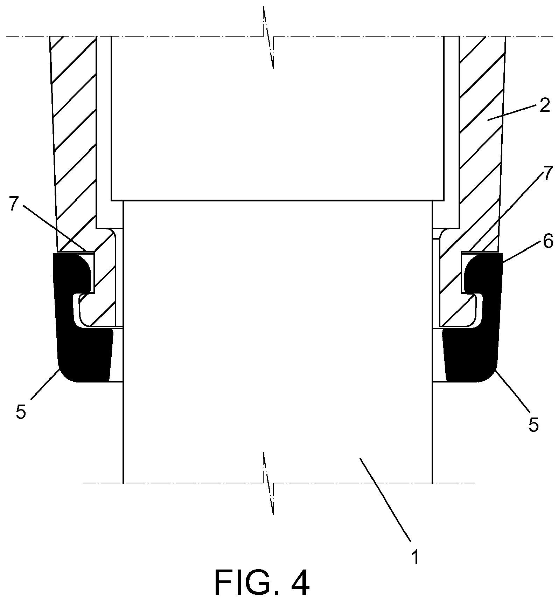

Figure 4 shows the detailed view of the fixing of the annular piece in the bushing where the diameter of the annular piece is greater than the smaller diameter of the bushing.

### Preferred embodiment of the invention

The invention is described below based on the previously mentioned figures.

The use of showers comprising a hose 1 is known by means of which a bushing 2 is joined to a head (not represented) containing a shower head through which the water comes out. This assembly is situated on a housing 4 of a support 3 to facilitate the shower of the user which provides the drawbacks already mentioned which the invention resolves by means of a coupling in which the lower end part of the bushing 2 comprises an annular piece 5 of soft material, such as for example rubber. This annular piece 5 has a diameter greater than the diameter of the bushing 2 to protect it when the operation of coupling in the housing 4 of the support 3 is carried out, whilst also protecting the housing 4, providing greater durability of the configuration and aesthetic of both components.

The bushing 2 comprises an annular channel 7 in which a ring 6 provided in the annular piece 5 is retained such that the annular piece 5 surrounds the lower edge of the bushing 2, establishing an impact-protection end.

In the exemplary embodiment of the invention, both the bushing 2 and the housing 4 exhibit an inverted conical configuration to facilitate the placement and centering of the bushing 2 in said housing 4 such that the annular piece 5 exhibits a greater diameter than the smaller diameter of the bushing 2 and of the housing 4 of the support 3 so that when the bushing 2 is introduced into said housing 4 of the support 3, a first elastic adjustment of the bushing 2 is carried out on the interior wall, when the annular piece 5 comes into contact against the walls of the housing 4, achieving a firm and gentle fit which facilitates the centering and shock absorption of the placement of the bushing 2 in the housing 4 of the support 3 of the shower, whilst also carrying out the function of protecting the bushing 2 and the housing 4. This configuration also provides significant stability in the coupling between the bushing and housing such that it prevents water hammers being produced which are so irritating for the user and which can sometimes cause the shower to fall.

In addition, the lower edge of the annular piece 5 of the bushing 2 is round such that it facilitates the operation of centering and shock absorption of the placement of the bushing 2 in the housing 4 of the support 3 of the shower.

Consequently, the configuration described can prevent the deterioration of the support 3 and of the bushing 2 for connecting the hose 1 when it is located therein. In addition, it allows the retention of said bushing 2 to be stabilized and improved once it has been coupled on said wall support, as described.

## Claims

1. A coupling of a flexible sanitary hose (1) to a shower support (3) comprising a bushing (2) by means of which said flexible sanitary hose (1) is joined to a head containing a shower head, **characterized in that** the bushing (2) comprises at its lower end with an annular piece (5) of soft material, whose diameter is greater than the diameter of the lower end of the bushing (2) to protect said bushing (2) when it is located in a housing (4) of the support (3) and simultaneously protects said housing (4).

2. The coupling according to claim 1, **characterized in that** the bushing (2) comprises an annular channel (7) in which a ring (6) provided in the annular piece (5) is retained.

3. The coupling according to the preceding claims, wherein the housing (4) of the support (3) and the bushing (2) comprises an inverted conical configuration; **characterized in that** the diameter of the annular piece (5) is greater than the smaller diameter of the bushing (2).

4. The coupling according to claim 3, **characterized in that** the diameter of the annular piece (5) is between 0.2 and 0.4 millimeters greater than the smaller diameter of the bushing (2).

5. The coupling according to the preceding claims, **characterized in that** the annular piece (5) of the bushing (2) comprises a round lower edge.

6. The coupling according to claim 1, **characterized in that** the soft material is rubber.
